# EUROPEAN PATENT APPLICATION

(11) **EP 4 358 041 A1**
(43) Date of publication of application: **24.04.2024**
(21) Application number: 22202364.0
(22) Date of filing: 19.10.2022
(51) Int. Cl.: G06V 30/146, G06V 30/148, G06V 30/19, G06V 20/40, G06V 20/70, G06V 10/82

(54) **VIDEO-PROCESSING FOR EQUIPMENT MAINTENANCE**

(71) Applicant: Koninklijke Philips N.V., 5656 AG Eindhoven (NL)
(72) Inventor: BRAHMA, Deb Kumar, Eindhoven (NL); SISODIA, Rajendra Singh, Eindhoven (NL); RAMANATHAN, Nakul, 5656 AG Eindhoven (NL)
(74) Representative: Philips Intellectual Property & Standards

(57) **Abstract**

Proposed concepts thus aim to provide schemes, solutions, concept, designs, methods and systems pertaining to video-processing for equipment maintenance. In particular, embodiments aim to provide a computer-implemented video-processing method for equipment maintenance. In other words, it is proposed that a video feed may be obtained and analyzed in order to identify a textual region within the video feed, and once identified, extracted in order to provide a modified video feed, wherein at least a portion of video data outside the identified textual region is removed or modified. In other words, this modified video feed may essentially be a cropped video, in both time and space, including only the identified textual region. This modified video feed may then be processed with a character recognition algorithm to convert the textual information within the textual region into a machine-readable format. This machine-readable textual information may then be utilized in a variety of ways.

## Description

### FIELD OF THE INVENTION

This invention relates to the field of video-processing for equipment maintenance, and in particular to the field of processing videos comprising textual information describing equipment.

### BACKGROUND OF THE INVENTION

Remote collaboration is defined as a process where multiple people/parties that are located in different geographic locations can communicate and work towards achieving a collective goal. In general, remote collaboration is a non-trivial task and can have multiple bottlenecks when many parties are trying to solve a problem remotely. In the present context, many technological improvements have facilitated the use of Head-Mounted-Displays (HMD) in communicating remotely. In such a scenario, the remote collaboration process between two or more people is done such that one party (often an on-site engineer) uses an AR/VR/MR enabled HMD to perform hands free operations, and the other party(s) communicate remotely with the on-site engineer to provide support.

In the context of remote collaboration for guiding an on-site engineer with an HMD, events/activities, errors and failures, exceptions and messages that occur during the entire procedure may be captured and summarized into a log-file. The main motive behind capturing information and events into a voluminous log-file is to have the ability to re-trace/re-create the procedural timeline of the entire process in an isolated environment. The advantage of using HMDs for performing remote collaboration and procedural guidance is that HMDs are well equipped to provide visualizations of the procedural instructions and logs related to the ongoing events and activities to a remote expert. Apart from being camera enabled, HMDs are commonly equipped with 6-axis/9-axis sensors for environment scanning and position tracking.

Once a connection between an on-site engineer and a remote expert is established, the remote expert may periodically check a live video feed shared by the on-site engineer's HMD. In case the remote expert wishes to check the status of the ongoing procedure, the on-site engineer must show the live log-file to be able to collect any feedback or find any faults in the equipment. Thus, in the present context, the success and failure of a remote collaboration process is completely dependent on the information available in the video feed from the on-site engineer's HMD, as well as the expertise and knowledge of the remote expert.

There usually exists a communication gap between the on-site engineer and the remote expert, as the remotely located expert should ideally be guiding the whole procedure rather than relying on the on-site engineer to show the particular log-file entries based on their limited knowledge. During these remote sessions, the remote expert cannot control the camera view of the on-site engineer. The communication between the two parties can also be made ineffective due to the unsteady video feed cause by the head movements of the on-site engineer. This may lead to motion blurring along with video feeds that are compromised in quality due to low network bandwidth.

In other words, text and log-files are crucial data for finding faults in equipment undergoing maintenance, and identifying an important text phrase via a video feed presents many problems due to motion blur and/or a low resolution of the video feed. These issues limit a remote expert's ability to perceive the fault and therefore to suggest the correct remedy.

There is therefore a need to develop a solution to process a video feed for equipment maintenance so that text within the video feed, such as a log-file, may be identified and processed, ultimately providing an improved remote collaboration experience.

### SUMMARY OF THE INVENTION

The invention is defined by the claims.

According to examples in accordance with an aspect of the invention, there is provided a computer-implemented video-processing method for equipment maintenance.

The method comprises: obtaining a video feed from a first user device, the video feed comprising video of displayed textual information describing the equipment; identifying a textual region within the video feed, the textual region comprising at least a portion of the textual information; and extracting the identified textual region from the video feed so as to provide a modified video feed, wherein at least a portion of video data outside of the identified textual region is removed or modified.

Proposed concepts thus aim to provide schemes, solutions, concept, designs, methods and systems pertaining to video-processing for equipment maintenance. In particular, embodiments aim to provide a computer-implemented video-processing method for equipment maintenance.

In other words, it is proposed that a video feed may be obtained and analyzed in order to identify a textual region within the video feed, and once identified, extracted in order to provide a modified video feed, wherein at least a portion of video data outside the identified textual region is removed or modified. In other words, this modified video feed may essentially be a cropped video, in both time and space, including only the identified textual region (and thus devoid of video data outside of the identified textual region). This modified video feed may then be processed, for example with a character recognition algorithm to convert the textual information within the textual region into a machine-readable format. This machine-readable textual information may then be utilized in a variety of ways.

By only requiring a video feed from a user device, embodiments may support equipment maintenance which may require a remote expert or a neural network to study the text within the video feed. An improved method for processing video for the ultimate aim of aiding equipment maintenance may therefore be provided by proposed concepts.

For instance, by automatically processing a video feed, which may be provided by a HMD or a smartphone or any other camera-enabled device of a user, to extract any textual information within the video feed and convert it into a machine-readable format, the textual information, such as a log-file, of great use in equipment maintenance, may be provided to a remote expert in a more useful and clear manner than simply reading from the video, or may be provided to a neural network which may analyze the text to predict a fault in the equipment. If provided to a neural network, a remote expert may not even be needed.

By extracting the identified textual region from the video feed so as to provide a modified video feed, such as a cropped video feed only including video data corresponding to the textual region, the efficiency of future (i.e. subsequent) steps, such as stabilizing the video or processing with a character recognition algorithm to convert the textual information into a machine-readable format, may be improved.

Purely by way of example, proposed embodiments may be of particular use in the case of remote collaboration, wherein a local on-site engineer may provide a video feed from an HMD they are wearing or a smartphone they are holding to a remote expert or a trained neural network. If the video feed includes displayed textual information describing the equipment, such as a label detailing the model number or serial number of the equipment, or a display with a log-file on, the textual information may be identified and extracted and then converted into a machine-readable format. This machine-readable format may then be provided to the remote expert separately to the video and audio feed in order that they may study the text in a clearer and more useful format. Once converted into a machine-readable format, the textual information may also be provided as an input to a neural network trained to analyze textual information associated with equipment maintenance and predict faults in the equipment. The use of a neural network may relieve reliance on the expertise of a remote expert to drive success of a remote collaboration process during maintenance of equipment. A neural network may be able to analyze the machine-readable textual information, e.g. the log-file, and take into account contextual data, such as previous data from maintenance events, in order to predict faults in equipment without the help of a remote expert, and in some cases, may in fact do so faster than a remote expert. For example, the neural network, trained to generate insights (e.g. a natural language processing based AI system) may include suggesting executable commands, e.g. executing new queries on the system database or executing command prompt on the system when in the service mode.

Ultimately, an improved computer-implemented video-processing method for equipment maintenance may be supported by the proposed concept(s).

In some embodiments, the first user device may be a head-mounted display (HMD). The use of a HMD, such as an augmented reality / virtual reality / mixed reality headset may allow the user to perform hands free operations, and may also allow feedback to be easily presented to the user, e.g. instructions for steps to perform on the equipment.

In some embodiments, the method may further comprise the step of processing the modified video feed with a character recognition algorithm to convert the textual information into a machine-readable format. Further, some embodiments may also comprise the step of stabilizing the modified video feed before processing with the character recognition algorithm. Due to movements of the first user device, for instance, head movements if the first user device is an HMD, or hand movements if the first user device is a smartphone, the video may be shaky and blurred. In order to better process the video with a character recognition algorithm, it has been found to be beneficial if the modified video feed is first stabilized in order to reduce the shaking and correct the motion blur.

In some embodiments, the video-feed may be a real-time video feed. This may be of use when the video feed is being streamed to a second party, for instance a remotely located expert on the equipment being maintained, wherein the remote expert may wish to provide instant feedback and guidance to the user. In other words, this allows the method to be used for remote collaboration.

In some embodiments, the identifying of a textual region may be done by a first neural network configured to perform pixel level semantic segmentation on the video feed to label each pixel as belonging to a certain class, such as a textual region. The use of a neural network, such as a Convolutional Neural Network (CNN), has been found to be of particular use in pixel level semantic segmentation of images or videos. This allows textual regions within the video feed to be easily identified.

In some embodiments, the method may further comprise communicating the machine-readable textual information to a remote expert. Once the textual information has been converted into a machine-readable format, e.g. plain text, communicating that information to a remote expert may allow them to more easily analyze the information rather than relying on the video feed itself. An associated advantage is that different segments of videos may be transferred to the remote expert on different channels. E.g. in the RTC Accessibility User Requirements (www.w3.org), standard, video, audio, data (text) can be transmitted in different channels such that the neural network can directly process the text data in the data channel.

In some embodiments, the method may further comprise providing the machine-readable textual information as an input to a natural language processing (NLP) system; and generating a summary using the NLP system based on the machine-readable textual information. NLP-based techniques vary from Extractive Summarization Techniques (methods that rely on extracting phrases and sentences from text to stack together to create a summary) to Abstractive Summarization Techniques (understanding the context of phrases and summarizing the entire text using different words and phrases, for instance, by using document-context vectors). Summarizing the information allows what may be a large volume of text to be reduced to only the most important information, allowing the more manageable amount of relevant information to then be assessed by a remote expert or provided to a neural network to analyze.

In some embodiments, the method may further comprise further providing contextual data describing context of the video feed, such as details of the equipment, as an input to the NLP system; and generating the summary using the NLP system further based on the contextual data. By further including contextual data in the summary, a remote expert and/or a neural network may have access to more relevant information to aid in their analysis.

In some embodiments, the method may further comprise providing the generated summary as an input to a second neural network, the second neural network being trained, based on the generated summary, to predict a fault in the equipment. By analyzing the generated summary, a second neural network, trained based on generated summaries to predict faults in equipment, may be able to predict a fault in the equipment.

In some embodiments, the method may further comprise determining a remedy for the predicted fault in the equipment by analyzing the summary and the predicted fault in the equipment. After a fault has been predicted in the equipment, a remedy for the fault may then be determined, potentially allowing the user to carry out the remedy. For example, the remedy may be determined by consulting a look-up table, listing known remedies for known faults.

In some embodiments, determining a remedy for the predicted fault may comprise providing the predicted fault in the equipment as an input, alongside the generated summary, to a third neural network, the third neural network being trained, based on the predicted fault in the equipment and generated summary, to determine a remedy for the predicted fault. A third neural network may be able to, based on the predicted fault, determine a remedy for the predicted fault.

In some embodiments, the method may further comprise generating at least one annotation for the obtained video feed based on the predicted fault in the equipment and the determined remedy, wherein the generated at least one annotation is presented at the spatial location of the identified textual region in the video feed. Based on the predicted fault and the determined remedy, an annotation for the obtained video feed may be generated which may inform the user as to the fault and how to remedy it. For instance, if the first user device is an HMD and the identified textual region is a log-file, the first user may be provided with an annotation presented at the 3D spatial location of the log-file describing the fault and providing instructions on how to remedy the fault allowing the first user to carry out the determined remedy with both hands.

In some embodiments, the method may further comprise generating an executable action based on the determined remedy, wherein the execution of the executable action is configured to affect the remedy of the predicted fault in the equipment. In this way, an execuable action may be provided that implements the remedy, and this action may be provided to a user and/or the equipment. Automatic provision of a predicted remedy may therefore be realized, e.g. by downloading of the executable action to the equipment for automatic execution/implementation.

In some embodiments, there is provided a computer program comprising code means for implementing any of the methods described above when said program is run on a processing system.

According to another aspect of the invention, there is provided a video-processing system for equipment maintenance comprising at least one processor; and a non-transitory computer-readable storage medium storing machine-readable instructions that cause the at least one processor to: obtain a video feed from a first user device, the video feed comprising video of displayed textual information describing the equipment; identify a textual region within the video feed, the textual region comprising at least a portion of the textual information; extract the identified textual region from the video feed so as to provide a modified video feed, wherein at least a portion of video data outside of the identified textual region is removed or modified; and process the modified video feed with a character recognition algorithm to convert the textual information into a machine-readable format.

Thus, there may be proposed concepts for processing video for equipment maintenance, and this may done based on the processing of a video feed comprising video of displayed textual information describing the equipment.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified flow diagram of a computer-implemented video-processing method for equipment maintenance according to a proposed embodiment;
Fig. 2 is a more in-depth flow diagram of a computer-implemented video-processing method for equipment maintenance according to a proposed embodiment;
Fig. 3 is a simplified block diagram of a video-processing system for equipment maintenance a proposed embodiment; and
Fig. 4 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

Implementations in accordance with the present disclosure relate to various techniques, methods, schemes and/or solutions pertaining to processing video for equipment maintenance. According to proposed concepts, a number of possible solutions may be implemented separately or jointly. That is, although these possible solutions may be described below separately, two or more of these possible solutions may be implemented in one combination or another.

Embodiments of the invention aim to provide a computer-implemented video-processing method for equipment maintenance. This can be achieved by obtaining and analyzing a video feed in order to identify a textual region within the video feed, and once identified, to extract the textual region in order to provide a modified video feed. The modified video feed may essentially be a cropped video, in both time and space, including only the identified textual region. This modified video feed may therefore be optimized (or at least improved) for subsequent processing, due to the removal or modification of data outside of the identified textual region. For instance, redundant or superfluous data may be removed from consideration in subsequent processing steps, thus reducing processing requirements for such processing steps.

By way of example, the modified video may be subsequently processed with a character recognition algorithm to convert the textual information within the textual region into a machine-readable format. With at least a portion of video data outside of the identified textual region being removed or modified from/in the modified video, an amount of data needed to be processed by the character recognition algorithm may be greatly reduced, thus reducing the processing resources and/or time required for executing the character recognition algorithm.

Proposed concepts thus aim to automatically process a video feed, which may be provided by a HMD of a user, to extract any textual information within the video feed and convert it into a machine-readable format. The textual information, which may be a log-file, may be of great use in equipment maintenance and may then be provided to a remote expert in a more useful and clear manner than them simply relying on and reading from the video feed itself. The machine-readable textual information may also be provided to a neural network which may analyze the text to predict a fault in the equipment.

This invention may be of particular use in the case of remote collaboration, wherein a local on-site engineer may provide a video feed from an HMD they are wearing or a smartphone they are holding to a remote expert or a trained neural network. If the video feed includes displayed textual information describing the equipment, such as a label detailing the model number or serial number of the equipment, or a display with a log-file on, the textual information may be identified and extracted and then converted into a machine-readable format. This machine-readable format may then be provided to the remote expert separately to the video and audio feed in order that they may study the text in a clearer and more useful format. Once converted into a machine-readable format, the textual information may also be provided as an input to a neural network trained to analyze textual information associated with equipment maintenance and predict faults in the equipment.

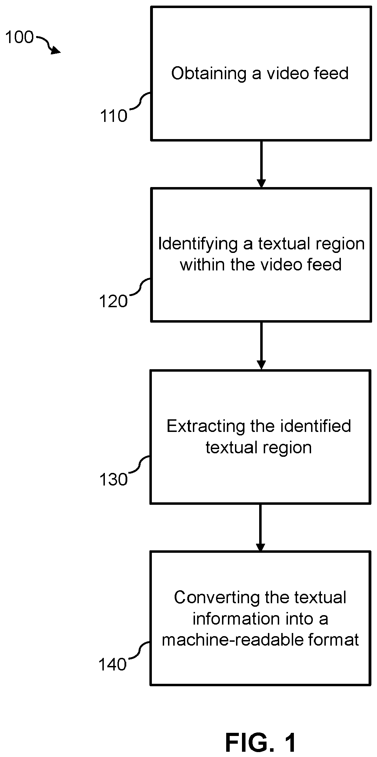

Referring now to Fig. 1, there is depicted a flow diagram of a computer-implemented video-processing method 100 for equipment maintenance. The method begins with step 110 of obtaining a video feed from a first user device, the video feed comprising video of displayed textual information describing the equipment. In some embodiments, the first user device may be a head-mounted display (HMD). The use of a HMD, such as an augmented reality / virtual reality / mixed reality headset may allow the user to perform hands free operations, and may also allow feedback to be easily presented to the user, e.g. instructions for steps to perform on the equipment. In some embodiments, the video-feed may be a real-time video feed. This may be of use when the video feed is being streamed to a second party, for instance a remotely located expert on the equipment being maintained, wherein the remote expert may wish to provide instant feedback and guidance to the user. In other words, this allows the method to be used for remote collaboration. In this case, for example, the remote expert may instruct the user to start performing equipment maintenance steps and then to look at the generated log-files, so that they may see the effect the steps are having on the equipment.

Non-limiting example textual regions in a video feed may be: log-files; event logs; historical reports (tested and calibrated) for faults in the equipment; testing/diagnostic tools that display data from onboard sensors such as power, temperature levels, gas levels, LEDs, etc.; position and configuration checks; firmware and application software checks (applicable for part replacements too); medical text reports; program code. In all of the above options, there could be voluminous textual data that ought to be searched through in order to find faults or warnings or any irregular or abnormal patterns in the logged information that may reflect a fault in the equipment that has happened or is likely to happen in the future. Log-files may reflect various performance parameters and values associated with the equipment, and may act as the key data in finding a fault in the equipment. Other data in the video feed could include graphical data, pictorial data, terminal data, encrypted data, etc. Thus a remote expert viewing the video feed could collaborate with the user by viewing the data in the video feed.

In step 120, a textual region within the video feed is identified, the textual region comprising at least a portion of the textual information. There may be multiple textual regions within the video feed, in which case all textual regions may be identified. In some embodiments, the identifying of a textual region may be done by a first neural network configured to perform pixel level semantic segmentation on the video feed to label each pixel as belonging to a certain class, such as a textual region. Semantic segmentation refers to the partitioning of a digital image/video frame into multiple segments based on pixel level granularity. The process is based on linking each pixel to a label or class so that similar types of data can be extracted and viewed together. In other words, semantic segmentation refers to image classification at a pixel level. The use of a neural network, such as a Convolutional Neural Network (CNN), has been found to be of particular use in pixel level semantic segmentation of images or videos. This allows textual regions within the video feed to be easily identified.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

There are several types of neural network, such as convolutional neural networks (CNNs) and recurrent neural networks (RNNs). This exemplary embodiment of the present invention employs CNN-based learning algorithms, because CNNs have proved to be particularly successful at analyzing images, and are able to identify objects within images with a much lower error rate than other types of neural network.

CNNs typically contain several layers, including a convolutional layer, a pooling layer, and a fully connected layer. The convolutional layer consists of a set of learnable filters and extracts features from the input. The pooling layer is a form of non-linear down-sampling, reducing the data size by combining the outputs of a plurality of neurons in one layer into a single neuron in the next layer. The fully connected layer connects each neuron in one layer to all the neurons in the next layer.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g. ±1%) to the training output data entries. This is commonly known as a supervised learning technique.

For example, weightings of the mathematical operation of each neuron may be modified until the error converges. Known methods of modifying a neural network include gradient descent, backpropagation algorithms and so on.

The training input data entries for the first neural network which may be used in step 120 may correspond to example videos comprising at least one textual region. The training output data entries may correspond to labelling each pixel as belonging to a textual region or not. Further, several preprocessing methods may be employed to improve the training samples.

In step 130, the identified textual region is extracted from the video feed so as to provide a modified video feed, wherein at least a portion of video data outside of the identified textual region is removed or modified. In other words, the modified video feed may essentially be a cropped video, in both time and space, including only the identified textual region. One example modification could be the changing of every non-textual region pixel to black.

In step 140, the modified video feed is processed with a character recognition algorithm to convert the textual information into a machine-readable format. Textual Recognition techniques related to expressing visual data as machine readable data has been a highly researched area in the field of Computer Vision and Natural Language processing along with Machine Learning. Optical Character Recognition is one such field of study in Computer Science which focuses on electronically recognizing and converting handwritten/visual/typed/printed text into machine-encoded text. The source of the image containing the text could range from being either a frame from a video with text in it, a photo of a document, a scanned document, etc. Essentially, the main idea is to convert the text present in a non-machine encoded format into a machine-encoded and readable format, such as plain text. This may then allow the textual information to be more clearly presented to a remote expert, or provided as input to a neural network.

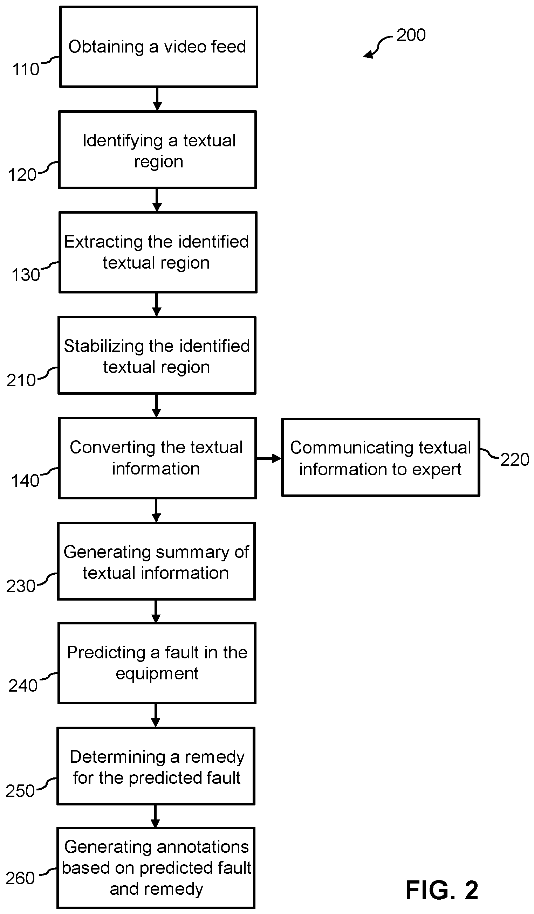

Referring now to Fig. 2, there is depicted a more in-depth flow diagram of a computer-implemented video-processing method 200 for equipment maintenance according to a proposed embodiment. The method starts with steps 110, 120, and 130 as described above. In step 210, the modified video feed is stabilized before processing with the character recognition algorithm, i.e. step 140 as described above. Due to movements of the first user device, for instance, head movements if the first user device is an HMD, or hand movements if the first user device is a smartphone, the video may be shaky and blurred. In order to better process the video with a character recognition algorithm, it has been found to be beneficial if the modified video feed is first stabilized in order to reduce the shaking and correct the motion blur. Image stabilization is a technique by which the blurring associated with capturing an image/video is attempted to be reduced. Blurring of an image/video could be due to a variety of reasons ranging from disturbance, jitter, angular movement, etc. Blurring occurs due to the motion of a device during exposure while capturing the image/video.

In step 220, the machine-readable textual information is communicated to a remote expert. Once the textual information has been converted into a machine-readable format, e.g. plain text, communicating that information to a remote expert may allow them to more easily analyze the information rather than relying on the video feed itself. A separate communication channel purely for textual data may be established, separate to the video and audio feed used for communication between the user and the remote expert, in order to more easily and clearly exchange the textual data from the video feed to the remote expert. In other words, in simple Remote Collaboration scenarios using Mixed Reality, the main channels for communication typically include support for audio and video data formats. By converting the available visual text information from the video feed into machine-readable textual information, it can be sent via a separate channel to the remote expert for further perusal.

In step 230, the machine-readable textual information is provided as an input to a natural language processing (NLP) system, which then generates a summary based on the machine-readable textual information. In essence, text summarization refers to the process of generating a concise and meaningful summary of text from one or more text resources. NLP-based techniques vary from Extractive Summarization Techniques (methods that rely on extracting phrases and sentences from text to stack together to create a summary) to Abstractive Summarization Techniques (understanding the context of phrases and summarizing the entire text using different words and phrases, for instance, by using document-context vectors). This process of text summarization can be supervised as well as un-supervised depending on the use case and requirements of the scenario. Summarizing the information allows what may be a large volume of text to be reduced to only the most important information, allowing the relevant information to then be assessed by a remote expert or provided to a neural network to analyze.

In some embodiments, the method may further comprise further providing contextual data describing context of the video feed, such as details of the equipment, as an input to the NLP system; and generating the summary using the NLP system further based on the contextual data. By further including contextual data in the summary, a remote expert and/or a neural network may have access to more relevant information to aid in their analysis.

In step 240, the generated summary is provided as an input to a second neural network, the second neural network being trained, based on the generated summary, to predict a fault in the equipment. By analyzing the generated summary, a second neural network, trained based on generated summaries to predict faults in equipment, may be able to predict a fault in the equipment. The use of a neural network to predict faults in equipment based on textual information from a video feed reduces dependency on remote experts during equipment maintenance. A neural network may be able to predict faults in equipment faster than a remote expert.

In other words, once the text has been summarized and, optionally, the context captured, a trained deep learning model may be deployed to map the contextualized text into exact 'codes' that may enable quicker troubleshooting, i.e. the finding of faults in the equipment.

In step 250, a remedy for the precited fault in the equipment is determined by analyzing the summary and the predicted fault in the equipment. After a fault has been predicted in the equipment, a remedy for the fault may then be determined, potentially allowing the user to carry out the remedy. For example, the remedy may be determined by consulting a look-up table, listing known remedies for known faults. In some embodiments, determining a remedy for the predicted fault may comprise providing the predicted fault in the equipment as an input, alongside the generated summary, to a third neural network, the third neural network being trained, based on the predicted fault in the equipment and generated summary, to determine a remedy for the predicted fault. A third neural network may be able to, based on the predicted fault, determine a remedy for the predicted fault.

In other words, a third neural network, which may be the same as the second neural network in some embodiments, may be able to predict the required steps to fix the predicted problem. For instance, these steps may be to check for heating or temperature failures, wiring failures, voltage issues, etc. The third neural network may be trained on previous log-file entries and log-file history with the corresponding proposed solutions which were followed while troubleshooting the problem in the past. Thus, the second and third neural networks may work together to provide a complete highly efficient alternative to a remote expert during equipment maintenance.

In step 260, at least one annotation for the obtained video feed is generated based on the predicted fault in the equipment and the determined remedy, wherein the generated at least one annotation is presented at the spatial location of the identified textual region in the video feed. Based on the predicted fault and the determined remedy, an annotation for the obtained video feed may be generated which may inform the user as to the fault and how to remedy it. For instance, if the first user device is an HMD and the identified textual region is a log-file, the user may be provided with an annotation presented at the 3D spatial location of the log-file describing the fault and providing instructions on how to remedy the fault allowing the user to carry out the determined remedy with both hands. In other words, a visual overlay of predicted faults in the equipment and steps to remedy them may be provided on the video feed by annotating the textual regions for visually assisted guidance. The annotations may be based on a VR Markup Language based formatting, in order to place the annotations in 3D space. In some embodiments, the remote expert may also provide at least one annotation for the obtained video feed.

In other words, annotations/tags/messages can be created corresponding to the particular predicted faults, and these may be mapped to the exact spatical co-ordinates where they are located in the display of a mixed reality headset, for example. To be able to most effectively help a user, the annotations may be based on the understanding and contextualization performed in previous steps. For example, where a user is examining a CT machine with software modules, the annotations may comprise CT machine related codes/error messages which can then be displayed on the log-file entries related to the fault. To be able to perform this, a reverse mapping of the machine-encoded text to video feed spatial coordinates where the text was originally read from may be made. Error messages/tags/annotations may then be placed onto the same environment from which the faults and context were initially read and understood.

To be able to achieve this, a Virtual Reality Markup Language format is proposed which may allow the mapping of annotations to specific spatial locations in the textual region of the video stream. In general terms, a markup language is a system for annotating a document in a way that is visually distinguishable from the content. Thus, in an embodiment, annotations can be overlayed onto exact spatial coordinates in the video feed.

In some embodiments, there is provided a computer program comprising code means for implementing any of the methods described above when said program is run on a processing system.

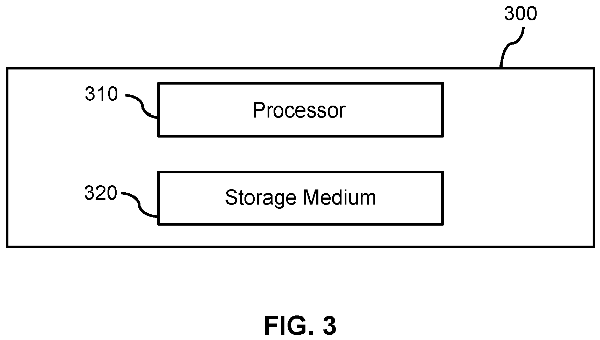

Referring now to Fig. 3, there is depicted a simplified block diagram of a video-processing system 300 for equipment maintenance according to a proposed embodiment. The video-processing system comprises at least one processor 310, and a non-transitory computer-readable storage medium 320 storing machine-readable instructions that cause the at least one processor to: obtain a video feed from a first user device, the video feed comprising video of displayed textual information describing the equipment; identify a textual region within the video feed, the textual region comprising at least a portion of the textual information; extract the identified textual region from the video feed so as to provide a modified video feed, wherein at least a portion of video data outside of the identified textual region is removed or modified; and process the modified video feed with a character recognition algorithm to convert the textual information into a machine-readable format.

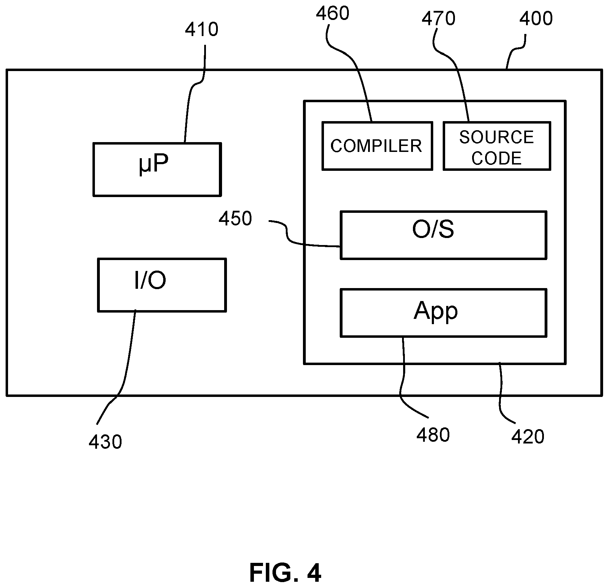

Fig. 4 illustrates an example of a computer 400 within which one or more parts of an embodiment may be employed. Various operations discussed above may utilize the capabilities of the computer 400. In this regard, it is to be understood that system functional blocks can run on a single computer or may be distributed over several computers and locations (e.g. connected via internet).

The computer 400 includes, but is not limited to, PCs, workstations, laptops, PDAs, palm devices, servers, storages, and the like. Generally, in terms of hardware architecture, the computer 400 may include one or more processors 410, memory 420 and one or more I/O devices 430 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 410 is a hardware device for executing software that can be stored in the memory 420. The processor 410 can be virtually any custom made or commercially available processor, a central processing unit (CPU), a digital signal processor (DSP), or an auxiliary processor among several processors associated with the computer 400, and the processor 410 may be a semiconductor based microprocessor (in the form of a microchip) or a microprocessor.

The memory 420 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 420 may incorporate electronic, magnetic, optical, and/or other types of storage media. Note that the memory 420 can have a distributed architecture, where various components are situated remote from one another, but can be accessed by the processor 410.

The software in the memory 420 may include one or more separate programs, each of which comprises an ordered listing of executable instructions for implementing logical functions. The software in the memory 420 includes a suitable operating system (O/S) 450, compiler 460, source code 470, and one or more applications 480 in accordance with exemplary embodiments. As illustrated, the application 480 comprises numerous functional components for implementing the features and operations of the exemplary embodiments. The application 480 of the computer 400 may represent various applications, computational units, logic, functional units, processes, operations, virtual entities, and/or modules in accordance with exemplary embodiments, but the application 480 is not meant to be a limitation.

The operating system 450 controls the execution of other computer programs, and provides scheduling, input-output control, file and data management, memory management, and communication control and related services. It is contemplated by the inventors that the application 480 for implementing exemplary embodiments may be applicable on all commercially available operating systems.

Application 480 may be a source program, executable program (object code), script, or any other entity comprising a set of instructions to be performed. When a source program, then the program is usually translated via a compiler (such as the compiler 460), assembler, interpreter, or the like, which may or may not be included within the memory 420, so as to operate properly in connection with the O/S 450. Furthermore, the application 480 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 430 may include input devices such as, for example but not limited to, a mouse, keyboard, scanner, microphone, camera, etc. Furthermore, the I/O devices 430 may also include output devices, for example but not limited to a printer, display, etc. Finally, the I/O devices 430 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 430 also include components for communicating over various networks, such as the Internet or intranet.

If the computer 400 is a PC, workstation, intelligent device or the like, the software in the memory 420 may further include a basic input output system (BIOS) (omitted for simplicity). The BIOS is a set of essential software routines that initialize and test hardware at start-up, start the O/S 450, and support the transfer of data among the hardware devices. The BIOS is stored in some type of read-only-memory, such as ROM, PROM, EPROM, EEPROM or the like, so that the BIOS can be executed when the computer 800 is activated.

When the computer 400 is in operation, the processor 410 is configured to execute software stored within the memory 420, to communicate data to and from the memory 420, and to generally control operations of the computer 400 pursuant to the software. The application 480 and the O/S 450 are read, in whole or in part, by the processor 410, perhaps buffered within the processor 410, and then executed.

When the application 480 is implemented in software it should be noted that the application 480 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 480 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1-3, and the system of Fig. 4, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 4 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. The architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A computer-implemented video-processing method for equipment maintenance, the method comprising:
obtaining (110) a video feed from a first user device, the video feed comprising video of displayed textual information describing the equipment;
identifying (120) a textual region within the video feed, the textual region comprising at least a portion of the textual information; and
extracting (130) the identified textual region from the video feed so as to provide a modified video feed, wherein at least a portion of video data outside of the identified textual region is removed or modified.

2. The computer-implemented video-processing method of claim 1, wherein the identifying (120) of a textual region is done by a first neural network configured to perform pixel level semantic segmentation on the video feed to label each pixel as belonging to a certain class, such as a textual region.

3. The computer-implemented video-processing method of claim 1 or 2, wherein the method further comprises:
processing (140) the modified video feed with a character recognition algorithm to convert the textual information into a machine-readable format,
and optionally further comprising:
stabilizing (210) the modified video feed before processing with the character recognition algorithm.

4. The computer-implemented video-processing method of claim 3, wherein the method further comprises: communicating (220) the machine-readable textual information to a remote expert.

5. The computer-implemented video-processing method of claim 3 or 4, wherein the method further comprises:
providing the machine-readable textual information as an input to a natural language processing (NLP) system; and
generating (230) a summary using the NLP system based on the machine-readable textual information.

6. The computer-implemented video-processing method of claim 5, wherein the method further comprises:
further providing contextual data describing context of the video feed, such as details of the equipment, as an input to the NLP system; and
generating (230) the summary using the NLP system further based on the contextual data.

7. The computer-implemented video-processing method of claim 5 or 6, wherein the method further comprises:
providing the generated summary as an input to a second neural network, the second neural network being trained, based on the generated summary, to predict a fault in the equipment.

8. The computer-implemented video-processing method of claim 7, wherein the method further comprises determining (250) a remedy for the predicted fault in the equipment by analyzing the summary and the predicted fault in the equipment.

9. The computer-implemented video-processing method of claim 8, wherein determining (250) a remedy for the predicted fault comprises providing the predicted fault in the equipment as an input, alongside the generated summary, to a third neural network, the third neural network being trained, based on the predicted fault in the equipment and generated summary, to determine a remedy for the predicted fault.

10. The computer-implemented video-processing method of claim 8 or 9, wherein the method further comprises generating (260) at least one of:
an annotation for the obtained video feed based on the predicted fault in the equipment and the determined remedy, wherein the generated at least one annotation is presented at the spatial location of the identified textual region in the video feed; and
an executable action based on the determined remedy, wherein the execution of the executable action is configured to affect the remedy of the predicted fault in the equipment.

11. The computer-implemented video-processing method of any of claim 1 to 10, wherein the video-feed is a real-time video feed.

12. The computer-implemented video-processing method of any of claims 1 to 11, wherein the first user device is a head-mounted display (HMD).

13. A computer program comprising code means for implementing the method of any of claims 1 to 12 when said program is run on a processing system.

14. A video-processing system for equipment maintenance comprising:
at least one processor; and
a non-transitory computer-readable storage medium storing machine-readable instructions that cause the at least one processor to:
obtain a video feed from a first user device, the video feed comprising video of displayed textual information describing the equipment;
identify a textual region within the video feed, the textual region comprising at least a portion of the textual information; and
extract the identified textual region from the video feed so as to provide a modified video feed, wherein at least a portion of video data outside of the identified textual region is removed or modified.
